Europäisches Patentamt

(19) European Patent Office

Office européen des brevets

(11) **EP 0 742 745 B1**

(12) **EUROPEAN PATENT SPECIFICATION**

(45) Date of publication and mention
of the grant of the patent:
**12.05.1999 Bulletin 1999/19**

(51) Int. Cl.⁶: **B23K 26/06**

(86) International application number:
**PCT/CA95/00053**

(21) Application number: **95907519.3**

(22) Date of filing: **02.02.1995**

(87) International publication number:
**WO 95/21041 (10.08.1995 Gazette 1995/34)**

(54) **LASER-WELDING TECHNIQUES USING PRE-HEATED TOOL AND ENLARGED BEAM**

LASERSCHWEISSTECHNIKEN MIT VERWENDUNG VON EINEM VORGEWÄRMTEN
WERKZEUG UND EINEM VERGRÖSSERTEM STRAHL

TECHNIQUES DE SOUDAGE AU LASER AU MOYEN D'UN OUTIL PRECHAUFFE ET D'UN
FAISCEAU ELARGI

(84) Designated Contracting States:
**DE ES FR GB IT SE**

(30) Priority: **02.02.1994 GB 9401998**

(43) Date of publication of application:
**20.11.1996 Bulletin 1996/47**

(73) Proprietor: **POWERLASERS LTD.**
**Concord, Ontario L4K 1L3 (CA)**

(72) Inventors:
• **KINSMAN, Kenneth, Grant**
**Waterloo, Ontario N2T 2L9 (CA)**
• **DULEY, Walter, W.**
**King City, Ontario N2T 1K0 (CA)**

(74) Representative:
**Weitzel, Wolfgang, Dr.-Ing.**
**Patentanwalt**
**Friedenstrasse 10**
**89522 Heidenheim (DE)**

(56) References cited:
**EP-A- 0 373 345**          **DE-A- 4 017 286**
**US-A- 3 467 098**          **US-A- 4 560 100**
**US-A- 4 785 156**

• **IBM TECHNICAL DISCLOSURE BULLETIN, vol.**
**33,no. 5, October 1990 NEW YORK US, pages**
**122-123, XP 000107402 'Thermocouple laser**
**sonic bonding tip'**

## Description

The present invention relates in general to laser processing techniques and more particularly to the use of laser radiation for joining, parting, heat treating or thermally modifying materials.

Laser processing of a material such as a metal conventionally involves the use of laser radiation to heat the surface to temperatures at which some physical, chemical or metallurgical change takes place. Laser radiation impinges on the surface of the material and some fraction of the total incident laser power is absorbed and converted to heat. The size of the localized area over which this heating is produced is controlled by some external means such as by focusing the laser beam with a lens or mirror.

Laser radiation has the property that it can be focused to a spot size that may be as small as one laser wavelength in diameter. This yields a high intensity of radiation within the focal area. While a spot diameter as small as a wavelength may be required for certain micromachining and cutting operations, laser processing applications such as welding and heat treating require much larger beam diameters. For example, the optimal laser beam diameter for welding with $CO_2$ laser radiation may be as large as 100-500 μm. For heat treating, a cylindrical beam profile is often desirable. This may require a complex optical system to shape the laser beam.

Applications of lasers to drilling, cutting, welding and surface heat treatment are now well known. However, the efficiency with which laser radiation couples to the material during processing depends upon the state of the surface and the physical nature of the material. When the processing laser emits in the infrared such as for the $CO_2$, Nd:YAG or Nd:glass lasers, metal surfaces in particular are generally highly reflecting in so that only a fraction of incident radiation is initially absorbed and converted to heat. Thus metals such as copper, aluminum and silver are difficult to process with infrared lasers which are the commonly available lasers with sufficient power to perform the process.

The degree of coupling of incident laser radiation to metals can be influenced by the deposition or creation of surface coatings or layers of oxides, graphite or carbides which are strong absorbers at the infrared laser wavelengths. These coatings act to increase the fraction of incident laser radiation absorbed by the surface and to transfer the heat generated in this coating to the metal underneath.

Surface roughening, either by a chemical etching technique, by mechanical means or by means of exposure of the metal surface to high intensity laser radiation having a wavelength which is more strongly absorbed by the metal, can also be used to prepare a metal surface for laser processing with an infrared laser. However, the application of such coatings is time-consuming and the resulting efficiency of the process is dependent upon the quality of the application procedure. Furthermore, mixing of coating materials with the metal may lead to deleterious physical, chemical or metallurgical effects in the laser processed surface. When the surface treatment is applied by laser, this may require a separate laser device and/or beam focusing system in addition to the laser used for laser processing of the treated part.

Overall, the effect of laser radiation is to produce a specific temperature distribution over a defined area of the metal surface for the time interval required to generate the desired physical, chemical or metallurgical change in the metal. Due to the difficulty in coupling the beam to the metals to be processed the efficiency of energy transfer is low. Accordingly, it is normal to reduce the diameter of the beam to a minimum to increase the energy absorption in a highly localized area. However, the thermal conductivity of most metals is such that the energy absorbed is disseminated relatively quickly so that coupling of the beam is still less than optimum.

In laser welding, the conventional approach is to increase the incident intensity of the laser beam until a deep penetration or "keyhole" has been achieved. However, major faults such as cracks, undercuts, inclusions, inadequate penetration, pores, evaporation of alloying elements and lack of beam coupling can occur from such techniques, rendering such a process unsuitable for widespread use.

DE-A1-4 017 286 discloses a method according to the preamble of claim 1 and US-4 857 699 discloses a method and an apparatus according to the preambles of claims 7 and 12.

It is therefore an object of the present invention to obviate or mitigate these disadvantages.

According to the method of claim 1, initial coupling of the laser beam is facilitated by an ancillary system which acts to absorb efficiently laser radiation and then to transfer the energy absorbed from the laser beam to the metal surface of a workpiece over a localized area by means of secondary thermal radiation or by physical contact.

In a preferred embodiment, this ancillary system consists of a tool which is shaped or coated so as to absorb efficiently laser radiation and positioned to transfer energy to the workpiece. The mass of this tool and its absorption characteristics is such that it can achieve the desired temperature over the time available on being exposed to incident laser radiation. The tool may be thermally insulated from its surroundings to enhance the temperature elevation.

Upon achieving the desired temperature, the tool may be positioned adjacent to or is caused to contact the workpiece over a localized area. The effect of this is such as to produce the required physical, chemical or metallurgical changes in the surface of the material. After the desired effect is produced, the tool may be withdrawn from contact with the metal surface.

In some applications, it may be advantageous to bring the laser heated tool only close enough to the metal surface so as to produce the desired physical, chemical or metallurgical effect by radiative heating. In such a case, the tool would not physically contact the surface.

The shape of the tool may be chosen so as to cause heating over a defined area on the metal surface which has the shape of the tool. This can be in the form of a complex shape and can be unrelated to the intensity profile of the laser beam used to heat the tool.

Using micromachining or forming techniques, the area of the laser heated tool that is brought into contact with the metal surface can be larger or smaller than $\lambda^2$ where $\lambda$ is the laser wavelength. As a result, energy from a laser oscillating at a wavelength $\lambda$ may be efficiently coupled into a metal surface over an area that is smaller than the diffraction limit at that wavelength.

Once coupling has been established, the laser beam is caused to move along the workpiece to perform the desired process. This may be accomplished through relative movement between the tool and the workpiece or may be accomplished by direct impingement of the laser beam with the workpiece. In the latter case, where welding is to be performed, it has been found beneficial that the laser beam has a spot diameter on the workpiece equal to or greater than the thickness of the workpiece to be welded.

As a further aspect of the invention, therefore, there is provided a laser processing method according to claim 7, using an incident laser beam in which the spot size of the incident beam is enlarged to dimensions equal to or greater than the thickness of the component being joined, such that the thermal boundary conditions of the process are modified. This geometric relationship between laser spot size and the material to be welded influences the processing event as thermal waves reflect from the rear surface creating a larger more stable weld zone.

In a further aspect of the invention, there is provided a laser processing apparatus according to claim 12.

Embodiments of the present invention will now be described by way of example, with reference to the accompanying drawings, in which

Figure 1 is a schematic representation of an apparatus to perform a laser machining operation upon a workpiece;
Figure 2 is an enlarged view of a tool shown in Figure 1;
Figure 3 is a schematic representation similar to Figure 1 showing additional control functions for the apparatus of Figure 1.;
Figure 4 is a schematic representation, similar to Figure 1, showing an alternative arrangement of laser machining;
Figure 5 is an end view of the representation of Figure 3;
Figure 6 is a set of curves showing the effect of enhanced coupling of the laser beams;
Figure 7 is a microphotograph of a weld completed with the apparatus of Figure 4;
Figure 8 is a schematic representation of an apparatus to perform processing at multiple locations; and
Figure 9 is a schematic representation of an alternative apparatus to that shown in Figure 8.

In each of the embodiments shown, the laser processing is performed as a welding operation but it will be appreciated that other processing such as cutting, heat treatment, surface preparation, drilling or the like, may be accomplished in a similar manner.

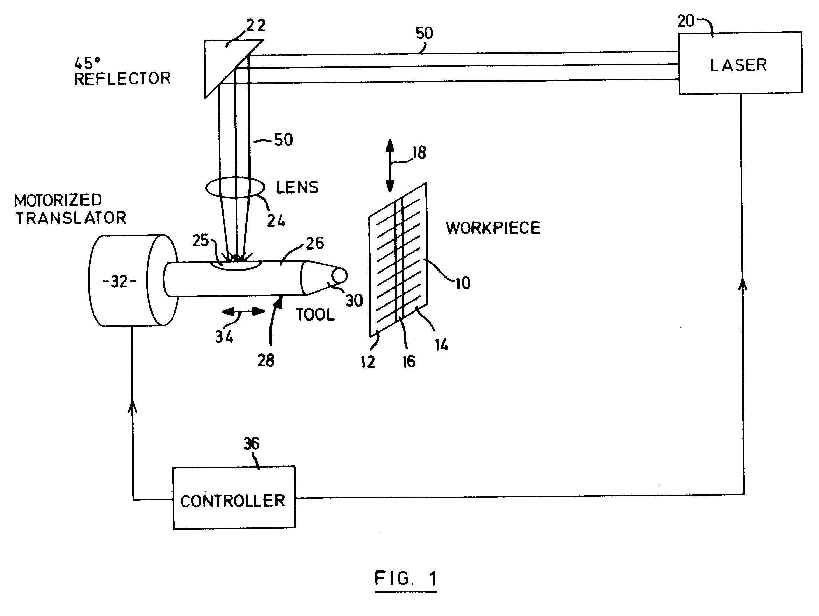

Referring therefore to Figure 1, a workpiece 10 includes a pair of components 12,14 that are to be welded to one another along a seam 16 defined between abutting edges. The workpiece 10 is mounted on a carriage (not shown) so as to be movable along an axis 18.

Energy is supplied from a laser unit 20, typically a $CO_2$ or Nd:YAG lasing unit, through a reflector 22 and lens 24 to impinge upon an absorption zone 25 of a barrel 26 of a tool 28. The tool 28 has a tip 30 directed toward seam 16 and is mounted in a support 32. Support 32 includes a translation device to adjust the position of the tool 28 along its longitudinal axis indicated at 34. The translation device and laser unit 20 are controlled by a controlling unit 36.

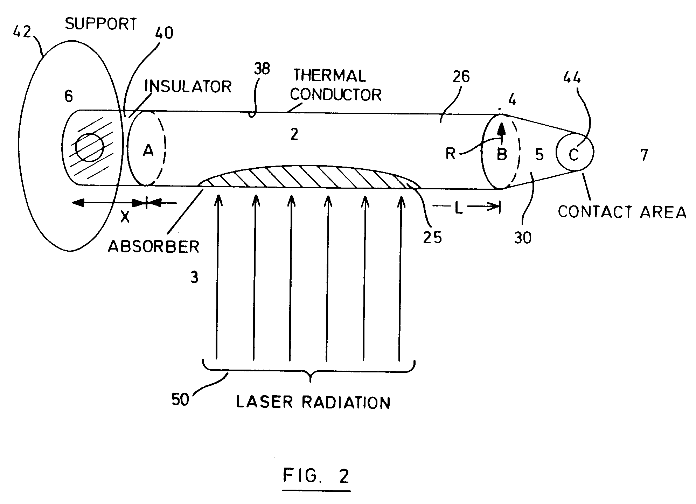

As shown in greater detail in Figure 2, barrel 26 has an outer surface 38 with at least the absorption zone 25 being of a material that either inherently absorbs strongly the laser radiation or that is treated or machined in such a way as to absorb strongly the incident laser radiation. The tool 28 should, of course, have a higher melting temperature than the material to be processed and typically may be of carbide, molybdenum, tungsten, tantalum or ceramics, all of which are strong absorbers. Where the tool surface is treated, the absorbtion may be enhanced by application of paints, surface oxidation such as anodising by treatment with an excimer laser as shown in U.S. Patent 4,857,699 or other suitable treatment. Typically, surfaces with absorbtion coefficients, $\varepsilon$, equal to or greater than 0.2 have been found satisfactory. Where surface treatments are utilised, the material of the tool 28 need not exhibit the strong absorption but a material with appropriate melting point and thermal conductivity should be used.

The barrel 26 is connected at one end to an insulating disk 40 which in turn is connected to support in the form of an armature 42 of the translation device. At the opposite end, the tip 30 is conical with an end surface 44 providing a contact area for impingement with the workpiece 10. The end surface 44 is dimensioned so as to provide an area which is smaller than $\lambda^2$ where $\lambda$ is the wavelength of the incident laser beam.

In operation, the workpiece 10 is positioned so that the tool 28 is located adjacent to but not in contact with the seam 16. The controlling unit 36 activates the laser unit 20 so that a beam of coherent energy indicated at 50 is reflected by reflector 22 and focused by lens 24 to impinge upon the absorption zone 25 of surface 38 of barrel 26. The surface treatment of surface 38 enhances the coupling of the beam 50 to the barrel 26 to elevate the temperature of the tip 30 above the melting point of the workpiece 10.

Once the tip 30 has attained the requisite temperature, the surface 44 is brought into contact with the workpiece 10 and energy is transferred to melt the abutting edges of the components 14,16. With the weld initiated, the tool 28 is retracted from physical contact but maintained adjacent to the workpiece 10 as it is moved along the axis 18 relative to the tool 28. Energy supplied to the tool by the beam 50 is transferred to the workpiece 10 to continue the weld along the seam 16.

Alternatively, the tool may be left in contact with the workpiece as it is moved along the seam 16 to transfer heat by contact as well as radiation.

By utilizing the intermediary of the tool 28, it is possible to optimize the absorption of the laser energy and transfer it to the workpiece 10 under optimum conditions. Heat transfer can be effected by conduction with direct contact with the workpiece and/or by radiation at wavelengths determined by the characteristics of the tool 28 and its temperature. Such radiation is chosen to be at wavelengths that are absorbed more efficiently than the incident laser radiation thereby enhancing the efficiency of the laser processing. The radiation emitted by the heated tool 28 is a broad band radiation where the peak wavelength of the radiation is determined by the temperature of the tool. The broadband radiation which is obtained in the above described manner is absorbed more efficiently by metal surfaces when compared to a single wavelength radiation available from infrared emitting lasers.

The characteristics of the tool 28 may be determined by a consideration of the thermal constants of its components. The thermal constants associated with the tool are its thermal conductivity $K$ (J/gm°C); thermal diffusivity $\chi$ ($cm^2$/sec); heat capacity $C$ (J/gm°C); density $p$ ($gm/cm^3$;) and melting temperature $T_m$°C.

Examples of the tool are set out below with the following denotations to indicate the thermal constants of the components:-

| Insulating Disc 40 | Barrel 26 | Tip 30 |
|:---:|:---:|:---:|
| $K_1$ | $K_2$ | $K_5$ |
| $\chi 1$ | $\chi^2$ | $\chi^5$ |
| P1 | P2 | P5 |
| $T_{m1}$ | $T_{m2}$ | $T_{m5}$ |
| $C_1$ | $C_2$ | $C_5$ |

In a first example, the insulating disk 40 is made of fused quartz and the barrel 26 and tip 30 is formed of tungsten. The disk 40 has a radius R of 0.05 cm and a length X of 1 cm. Barrel 26 has a radius R of 0.05 cm and a length L of 1 cm. The length of the tip 40 is 0.1 cm. The thermal constants for these components are as follows:-

| Insulating Disk 40 | Barrel 26, Tip 30 |
|:---:|:---:|
| $K_1 = 0.02$ | $K_2 = K_5 = 1.2$ |
| $\chi_1 = 0.006$ | $\chi_2 = \chi_5 = 0.56$ |
| P1 = 2.2 | P2 = P5 = 19.3 |
| $T_{m1} = 1600$ | $T_{m2} = T_{m5} = 3380$ |
| $C_1 = 1.0$ | $C_2 = C_2 = 0.15$ |

When laser radiation with power P is incident on the outer surface 38 of barrel 26, a fraction $\varepsilon$ of this radiation will be absorbed at surface 38 and barrel 26. Typical values would be P = 1kw and $\varepsilon = 0.2$. If the power loss $P_L$ by conduction through the insulator 40 is much less than $\varepsilon P$, then the temperature rise in the shaft will be approximately

$$\Delta T = \frac{\varepsilon P \, \Delta t}{\pi (0.05)^2 \text{x1x0.15x19.3}}$$

where $\Delta t$ is the duration of laser heating of the tool 28. Accordingly, $\frac{\Delta T}{\Delta t} = 44 \varepsilon P$ °C/sec, with $\varepsilon = 0.2$ and $P = 1kw \, \frac{\Delta T}{\Delta t} = 8.8 \times 10^3$ °C/sec

A tool temperature of 2000°C can then be produced with a pulse duration of $\Delta t = 0.23$ sec. Conduction losses through the insulator will be approximately

$$P_L = K_1 \frac{\pi R^2}{\chi} (2000 - T_o)$$

where $T_o$ is the ambient temperature.

With $T_o = 20$°C, $P_L = 0.31$ watt, which satisfies the criteria $P_L << \varepsilon P$. The time scale for heat transfer from the barrel 26 to the end surface 44 of tip 40 is $t \cong l^2/\chi_5 = 0.1^2/0.56 = 0.018$ sec. It is apparent that this time may be varied by changing the dimensions, composition and shape of the bit so as to optimize the effect of the tool 28 on the workpiece 10.

In a second embodiment of a tool 38 made from the same materials, the length $\chi$ of disc 40 is 1 cm and the length (L) of barrel 26 is 0.1 cm. Both have a radius of $1 \times 10^{-3}$ cm. The length of tip 30 is 0.01 cm.

Here $\Delta T/\Delta t = 1.1 \times 10^6 \varepsilon P$ (°C/sec). With $\varepsilon = 0.2$, $P = 1kw$, a shaft temperature of 2000°C can be reached with a laser pulse duration $\Delta t = 9.1 \times 10^{-6}$ sec. conduction losses through the insulator will be $P_L = 1.2 \times 10^{-4}$ watts which satisfies the criterion $P_L << \varepsilon P$. The time scale for heat transfer from the shaft to the tip of the tool bit is $t = (0.01)^2/0.56 = 1.8 \times 10^{-4}$ sec.

These examples indicate that heat may be transferred either continuously or in a pulsed or periodic manner from the tool to the workpiece. For continuous heating the absorbed laser power $\varepsilon$ will be adjusted to balance the heat transfer to the workpiece over the contact area $\pi r^2$ where r is the radius of the end surface 44. The tool 28 is particularly beneficial when used with materials that are highly reflective at the wavelength of the laser beam 50 and possibly also highly conductive. Such materials include aluminum alloys, copper, magnesium alloys, silver and gold whose absorption coefficients are in the order of 0.03. Of course, the tool 28 may be used with other materials such as steel but the absorbtion coefficients are comparable to those of the tool and so the immediate benefits are not realised.

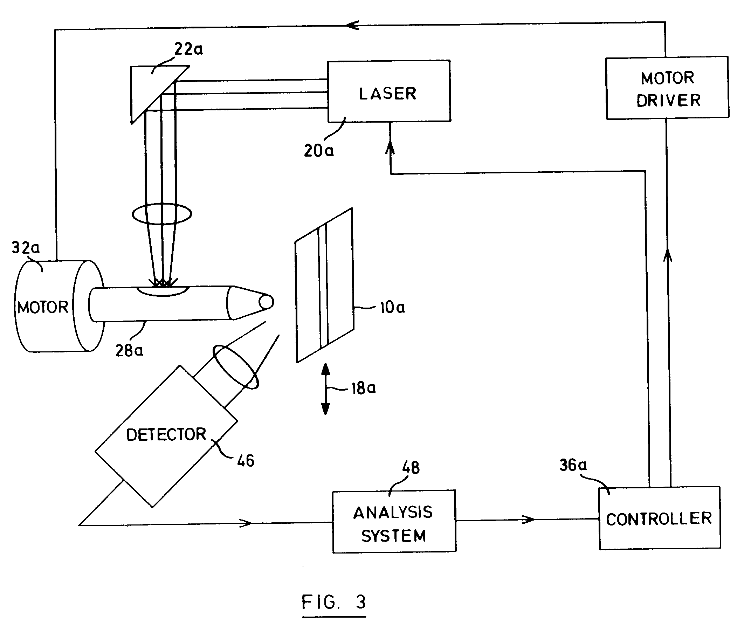

As shown in Figure 3, in which like reference numerals denote like components with a suffix 'a' added for clarity, control of the heat transfer can be accomplished by monitoring the effect of the heated tool 28a at the workpiece 10a with a suitable detector 46 such as a thermocouple, photometer, pyrometer, or CCD camera. The signal derived from the detector 46 is used to control via a feedback system 48 and controller 36 the laser beam intensity on the tool barrel 26a, the position of the tool 28a on the surface of the workpiece 10a or the pressure of the tool 28a on the workpiece 10a. Such control may incorporate a fuzzy logic-neural net analysis system.

With pulsed heating of the tool 28, a pulse of heat can be transferred from the barrel 26 to the tip 30 and then from the tip 30 to the workpiece 10. The duration, amplitude and repetition rate of these pulses can be controlled by computer control of the laser 20. They may be sequenced with a mechanical motion of the tool 28. For example, the laser may be instructed to generate a single pulse which causes the barrel 26 to be heated. After some delay time which allows the heat generated in the barrel 26 to flow to the contact end of the tip 30, the tool 28 may be moved to contact the workpiece 10. In this way, a series or a way of discrete areas may be processed on the workpiece.

It will be seen, therefore, that initiation of processing is accomplished more efficiently with the use of the intermediate tool 28 than with direct impingement and obviates the need to pretreat the components to initiate the coupling.

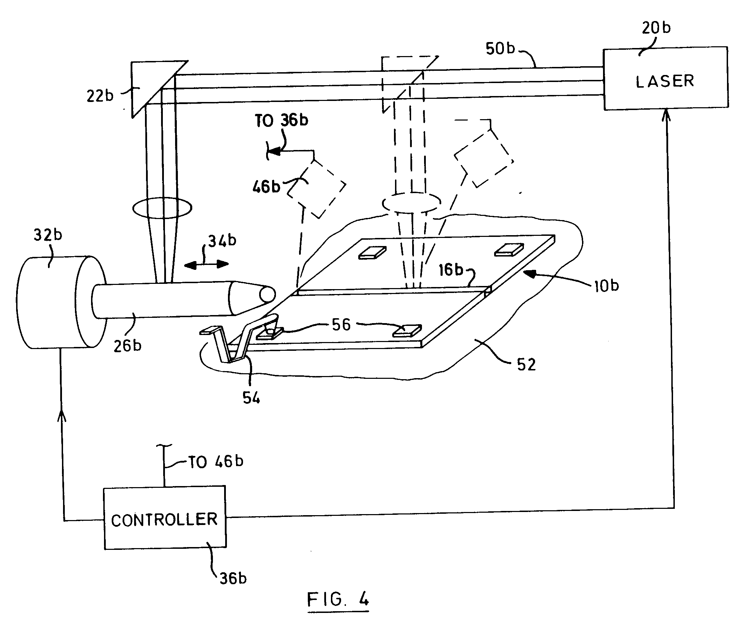

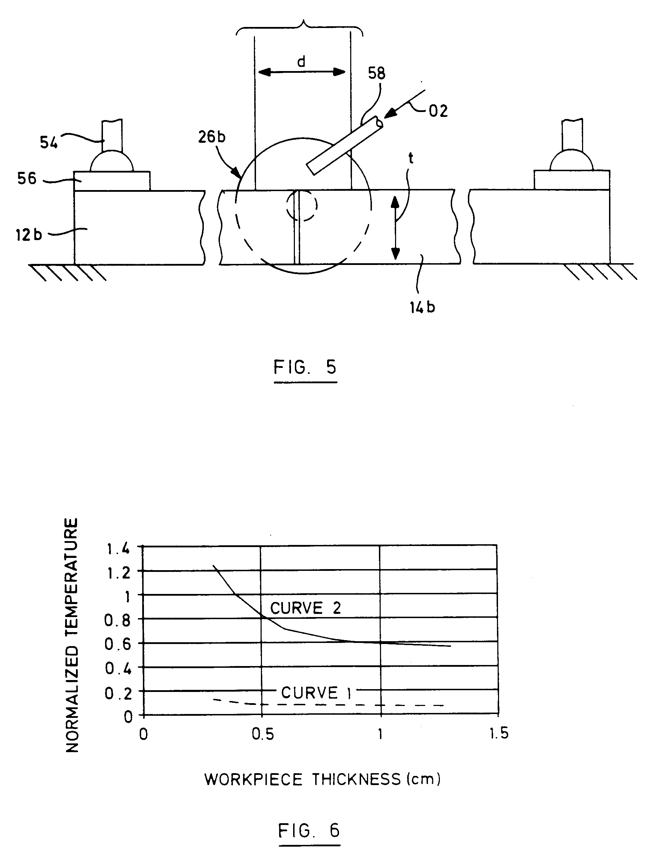

As described above, the tool 28 may be moved relative to the workpiece 10 to effect the welding. An alternative arrangement is shown in Figures 4 and 5 in which initial coupling of the laser beam to the workpiece is accomplished with a tool 28 as described above and subsequently the laser beam 50 is moved along the seam 16 independently of the tool 28. This arrangement will be further described below with like components denoted using like reference numerals with a suffix 'b' added for clarity.

Referring therefore to Figures 4 and 5, a $CO_2$ or other infrared laser source 20b delivers laser irradiation 50b to a workpiece 10b supported on a bed 52 of a 2 or 3 axis CNC motion system. A feedback sensor array 46b monitors processing variables, and returns information on the state, size and temperature of the weld pool. This information is received by the control computer 36b for real-time analysis, correction signals being generated by the computer 36b for control of the laser and/or motion system.

The workpiece 10b is retained on the bed 52 by clamps 54. A heating pad 56 is interposed between each clamp 54 and the respective one of the components 12b,14b and is supplied with electrical power to preheat the components 12b,14b.

A tool 26b is positioned adjacent one end of seam 16b and irradiated to attain a temperature above the melting point of the materials of the workpiece 10b. Tool 26b is then brought into contact with the components 12b,14b adjacent to the end of the seam 16b to initiate melting of the material.

The beam 50b is then moved from the tool 26b to the melted portion of the workpiece 10b. Because the workpiece 10 has been melted, initial coupling of the laser beam 50b is facilitated and further laser processing may be performed by scanning the beam 50 along the workpiece.

As noted above, the processing may include cutting, surface treatment or drilling of the workpiece 10b and the intensity of the beam 50b and its scan rate will be adjusted in accordance with known parameters.

The initial coupling achieved with the tool 26b is particularly beneficial when used to weld components 12b,14b along a seam 16b as shown in Figure 4. The beam 50b is moved from the tool 26b to the seam 16b for a sufficient dwell time, $T_d$ (which is a function of the workpiece thickness and incident laser intensity), to form a massive amount of subsurface melting as indicated in Figure 5. This melting occurs by conduction from the front i.e. laser irradiated surface being irradiated with the $CO_2$ laser. After melting occurs below the region melted by contact with the tool 26b, the tool 26b can be retracted and the laser beam 50b can be scanned along the seam 16b as indicated in ghosted outline. The scanning rate is determined so that the melting isotherm remains at the leading edge of the beam. This can be determined by the detector 46b that controls the scanning rate accordingly. During this scanning, sufficient coupling occurs through real-time oxidation of the irradiated surface to support a melting isotherm.

During this scanning, no shielding gases are required since an environment of ambient air is required to support real-time oxidation of the melting front. It has been found that improved welding performance may be obtained if the diameter of the incident beam 50b is equal to or greater than the minimum thickness of the material encountered during the welding. Thus, as shown in Figure 5, beam 50b has a diameter 'd' greater than the thickness 't' of one of the components 12b, 14b. Where the components 12b, 14b are of unequal thickness, then the diameter 'd' should be equal to or greater than the thinner of the two components. Moreover, protection of the focusing optics is not required since the beam is defocused. However, it is contemplated that the oxygen content may be increased in the welding environment in certain applications where the materials permit by providing an enriched oxygen atmosphere through a supply nozzle 58. Heating pads 56 are used to regulate the r e of cooling of the workpieces to provide a crack-free weld. Typically, each pad may supply up to 2000 watts to the components.

This improved means of welding is not dependent upon initial coupling by tool 26b. Excimer laser (or any other UV laser) pre-treatment could be used or other means may be found (torch, plasma, coatings, etc.) that achieves the same effect, that is, to enable rapid and massive melting in the Al alloy. Once a means of establishing a melting isotherm has been created, the $CO_2$ laser beam geometry as described is capable of supporting it.

By reducing the initial reflectivity, the threshold intensity for the welding process is lowered. This enables the spot size of the $CO_2$ laser beam on the workpiece surface to be enlarged and by enlarging the incident spot size of the laser beam, more efficient heating of the workpiece occurs. Moreover, because the tool 26b absorbs the incident radiation more efficiently, it is not necessary to focus the incident beam on the tool 26b to get the desired effect and so the subsequent transfer of the beam to the workpiece is facilitated.

Plasma absorbtion, which is often responsible for limiting the power incident on an irradiated surface can also be mitigated as a result of the reduction of the intensity of the incident laser.

A solution of the one dimensional heat conduction equation, for the case of no internal sources of heat but with a flux of intensity lo entering at Z=0 may be written in the form

$$T(z,t) = \frac{\varepsilon I_0 \chi t}{Kl} + \frac{\varepsilon I_0 l}{K}\left[\frac{3(l-z)^2 - l^2}{6l^2} - \frac{2}{\pi}\sum_{n=1}^{\infty}\frac{(-1)^n}{n^2}e^{\frac{-\chi n^2 \pi t}{l^2}}\cos\left(\frac{n\pi(l-z)}{l}\right)\right]$$

where

$$K = \text{Thermal conductivity}\left(\frac{W}{cm^\circ C}\right)$$

$$\chi = \text{Thermal diffusivity}\left(\frac{cm^2}{sec}\right)$$

$$\varepsilon = \text{Absorptivity}$$

$$I_o = \text{Incident intensity} \left( \frac{W}{cm^2} \right)$$

$$t = \text{Time (sec)}$$

$$I = \text{Workpiece thickness (cm)}$$

Figure 6 shows two curves of theoretical data using equation 1 for the case of z=0 and dwell time, $t_d$ = 0.5 sec. Curves 1 and 2 both represent the temperature at the surface of material as a function of the sheet thickness. The incident intensity used for both curves is $I_o$ = 7X10$^3$ W cm$^{-2}$ with a beam diameter of 0.32 cm. Temperature on the y axis has been normalized to an effective melting temperature, which takes into account the latent heat of fusion of the Al alloy. Curve 1 presents an aluminum surface which has been left untreated by any process (absorptivity, $\varepsilon$ = 0.03). The plot shows that the high initial reflectivity inhibits any significant heating. Curve 2 shows data for an Al surface which has been pre-treated to increase the initial absorptivity to $\varepsilon$ = 0.3. This theoretical curve supports experimental evidence that Al surfaces can melt for thicknesses close to 0.3 cm at $I_o$ = 7X10$^3$ W cm$^{-2}$ when using a beam diameter of 0.32 cm, providing initial coupling is enhanced. Such coupling may be enhanced by pretreatment of the surface or by use of an intermediate tool 28 as described above.

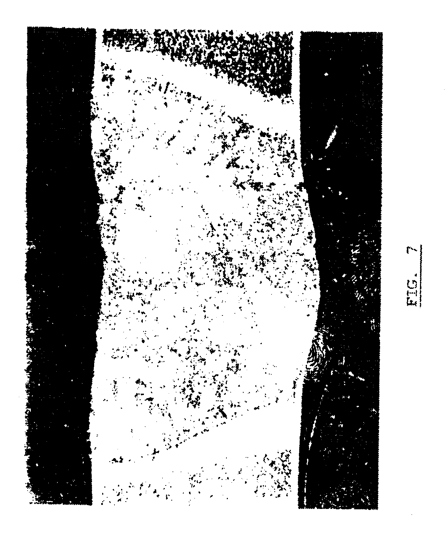

Figure 7 shows an optical micrograph of a cross-section view of two 3mm thick Al 7075 T6 plates successfully butt welded according to the principles described above. The welding speed was 2.5 mm sec$^{-1}$ and the incident lasing power was 1450 Watts. The micrograph clearly shows evidence of a massive conduction limited weld which has been previously unattainable in Al alloys. A melting efficiency, $\eta$ factor which ratios the energy required to melt the metal to the energy incident from the laser beam can be written as

$$\eta = \frac{bv\rho(C\Delta T + \Delta H)}{P}$$

where

$$b = \text{melting cross-sectional area (cm}^2)$$

$$v = \text{welding speed} \left( \frac{cm}{sec} \right)$$

$$P = CO_2 \text{ laser power (W)}$$

$$\Delta H = \text{latent heat of fusion}$$

$$\rho = \text{density} \left( \frac{gm}{cm^3} \right)$$

The weld shown in Figure 7 indicates a welding efficiency of approximately 0.11.

Table A below shows measured tensile strength and primary experimental parameters of welded Al 7075 using the increased diameter beam and the enhanced initial coupling described above. The samples had a thickness of 3 mm and a beam diameter of 3.2 mm.

| CO2 Laser Power (W) | Dwell time $T_d$ (sec) | Welding Speed (mm/sec) | Tensile Strength (MPa) |
|---|---|---|---|
| 1423 | 2 | 2.2 | 282 |
| 1428 | 2 | 2.35 | 289 |
| 1421 | 2.5 | 2.2 | 300 |

(continued)

| CO2 Laser Power (W) | Dwell time $T_d$ (sec) | Welding Speed (mm/sec) | Tensile Strength (MPa) |
|---|---|---|---|
| 1434 | 3 | 2.35 | 300 |
| 1544 | 3.5 | 2.54 | 330 |

Moreover, it is found that the alloy composition is not affected significantly through the weldment and the heat affected zone.

In a further test, two samples of Al 5754 were used, one of 2 mm thickness and the other of 0.8 mm thickness. The samples were welded edge to edge using a $CO_2$ laser power of 2600W and an oxygen enriched atmosphere. The dwell time $T_d$ was 100 msec. and a weld speed of 2540 mm/sec. was attained. The tensile strength of the weld was greater than that of the 0.8 mm sample material. The significant decrease in dwell time may be attributed to the decreased thickness of one of the amples and the increased weld speed attributed also to the oxygen enriched atmosphere possible with Al 5754. Oxygen could not be used with Al 7075 because of the zinc content present in that alloy.

This improved means of welding is not specific to the $CO_2$ laser. Other laser sources such as the YAG laser, emitting at a wavelength of 1.06 μm, or lasers emitting at other wavelengths (CO lasers) in the infrared can be utilized.

Although described for use with 7000 series alloys, the process may be used on other materials exhibiting similar properties. For example, it is contemplated that the principles disclosed herein may be used for welding of other materials such as aluminum based metal matrix composites (e.g. Al with embedded alumina particles). The new welding geometry and practice can also be applied to other difficult-to-weld Al alloys such as 5000 and 6000 series alloys as well as the highly reflective materials noted above.

In summary, therefore, the irradiation of the tool 26b enhances initial melting of the material to be processed that facilitates further coupling of the beam 50b to the material. Further processing may then be carried out by scanning the beam across the workpiece. Welding may be effected by utilizing a beam diameter of diameter greater than the thickness of the material.

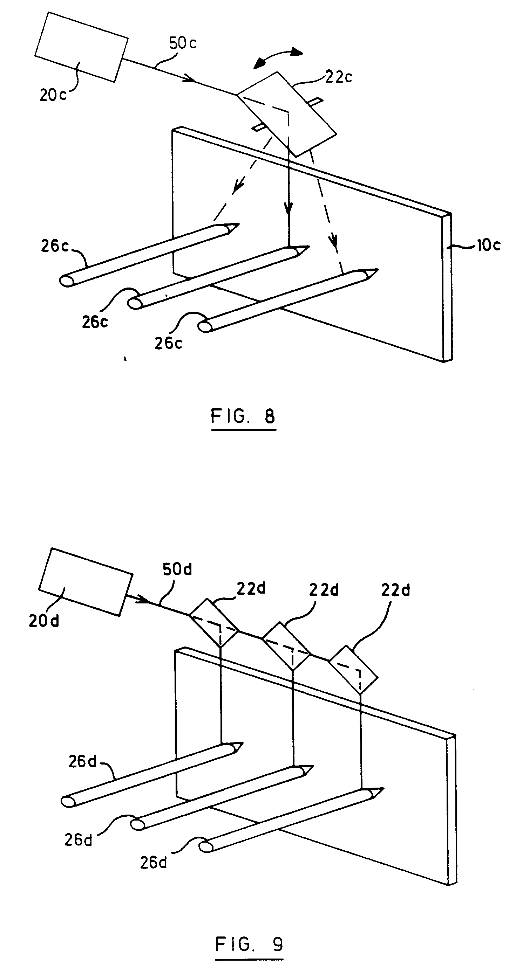

The embodiments described above show a processing operation in a single location on a workpiece. In certain applications, treatment may be required at multiple locations. Rather than move the tool between locations, an alternative approach is to construct a tool with more than one shaft/bit combination as shown in Figure 9 where a suffix 'c' is added for clarity. The laser 20c can then be time shared between these shaft/bit 26c combinations by scanning or stepping the reflector 22c to deflect the beam 50c while pulsing or chopping the laser beam. In this way, a variety of designate spots on the workpiece 10c may be treated without moving the tool.

A further alternative as shown in Figure 10 with a suffix 'd' would involve optically multiplexing the laser beam 50a between two or more shaft/bit combinations so as to simultaneously treat two or more spots on the workpiece.

As a further alternative, a single motor/shaft combination can be moved from one tool bit to another at spaced locations with an accompanying scanning of the laser so that the shaft is heated by the laser when the shaft is in contact with each tool bit.

## Claims

1.    A method of transferring energy from a laser beam (50b) to a workpiece (10b) for laser processing comprising the steps of irradiating a tool (20b) with a laser beam (50b) to elevate the temperature thereof, and positioning said tool (28b) adjacent to said workpiece (10b) to transfer energy thereto, characterized in that said beam (50b) is transferred from said tool (28b) to heat the workpiece (10b) upon attainment of a predetermined physical condition of said workpiece (10b) to process said workpiece.

2.    A method according to claim 1 further characterized in that said predetermined condition is melting of a portion of said workpiece (10b).

3.    A method according to claim 1 or 2 further characterized in that said tool (26b) contacts said workpiece to transfer energy thereto.

4.    A method according to claim 1, 2 or 3 further characterized in that said beam (50b) impinges said workpiece at a diameter (d) equal to or greater than the minimum thickness (t) of the workpiece (10b) encountered during laser processing.

5.    A method according to claim 4 wherein an oxygen enriched atmosphere (58) is provided adjacent to the impingement of said beam (50b) on said workpiece.

6. A method according to any preceding claim wherein at least a portion (25) of said tool (26b) is treated to enhance absorption of said laser radiation.

7. A method of laser processing a workpiece comprising the steps of coupling a beam to said workpiece and continuing to irradiate said workpiece with a beam of incident radiation characterized in that said beam has a diameter (d) greater than or equal to the minimum thickness (t) of the workpiece (10b) encountered during processing.

8. A method of laser processing according to claim 7 further characterized in that said beam (50b) is translated relative to said workpiece (10b) to perform said processing.

9. A method according to claim 7 or 8 further characterized in that said beam (50b) is coupled to said workpiece (10b) by irradiating a tool (26b) positioned adjacent to said workpiece (10b), said beam (50b) elevating the temperature of the tool (26b) to transfer energy to said workpiece.

10. A method according to any one of claims 7 to 9 wherein an oxygen enriched atmosphere (58) is provided around said beam (50b) as it impinges on said workpiece (10b).

11. A method according to any one of claims 1 to 10 further characterized in that heat is supplied (56) to said workpiece (10b) after processing to retard cooing thereof.

12. A laser processing apparatus comprising a source of laser radiation (20b) to generate a beam (50b) of coherent radiation, and a tool (26b) having a surface to be impinged by said radiation, and elevate the temperature thereof, said tool (26b) being positioned adjacent said workpiece (10b) to transfer energy thereto characterized in that means (22b) are provided for moving said beam relative to said tool (26b) to translate across said workpiece (10b) to perform processing thereof.

13. Apparatus according to claim 12 further characterized in that at least a portion (25) of said outer surface of said tool (26b) is treated to enhance absorption.

14. Apparatus according to claim 13 further characterized in that at least said portion (25) has a coefficient of absorption equal to or greater than 0.2 at the wavelength of said beam (50b).

15. Apparatus according to claim 14 further characterized in that absorption of said outer surface is enhanced by application of at least one of the group consisting of paints, surface oxidation and application of a laser of different wavelength.

16. Apparatus according to any of claims 12 to 15 further characterized in that said tool (26) is connected to a support (42) and an insulator (40) is interposed between said support (42) and tool (26) to inhibit heat transfer therebetween.

17. Apparatus according to any one of claims 12 to 16 wherein said tool (26) includes a barrel and a tip (30) to be positioned adjacent to said workpiece (10), said tip (30) being of reduced cross-section to said barrel.

18. Apparatus according to any one of claims 12 to 17 wherein said tool (26) is formed from a material selected from the group carbide, molybdenum tungsten, tantalum and ceramics.

19. Apparatus according to any one of claims 12 to 18 further characterized by a focusing system (24) to provide a beam (50b) having a diameter (d) greater than or equal to the minimum thickness (t) encountered during processing.

**Patentansprüche**

1. Verfahren zum Überführen von Energie von einem Laserstrahl (50b) auf ein Werkstück (10b) zum Laserbearbeiten, umfassend die Schritte des Bestrahlens eines Werkzeuges (20b) mit einem Laserstrahl (50b) zu dessen Temperatursteigerung, Positionieren des Werkzeuges (28b) im Bereich des Werkstückes (10b), um Energie auf dieses zu überführen, dadurch gekennzeichnet, daß der Strahl (50b) vom Werkzeug (28b) überführt wird, um das Werkstück (10b) dann aufzuheizen, wenn das Werkstück (10b) einen vorbestimmten physikalischen Zustand erreicht hat, um das Werkstück zu bearbeiten.

2. Verfahren nach Anspruch 1, dadurch gekennzeichnet, daß der vorbestimmte Zustand das Schmelzen eines Teiles des Werkstückes (10b) ist.

3. Verfahren nach Anspruch 1 oder 2, dadurch gekennzeichnet, daß das Werkstück (26b) zum Zwecke des Übertragens von Energie hierauf mit dem Werkstück in Kontakt steht.

4. Verfahren nach Anspruch 1, 2 oder 3, dadurch gekennzeichnet, daß der Strahl (50b) auf das Werkstück mit einem Durchmesser (d) auftrifft, der gleich oder größer als die minimale Dicke (t) des Werkstückes (10b) ist, gemessen während des Laserbearbeitens.

5. Verfahren nach Anspruch 4, wobei eine sauerstoffangereicherte Atmosphäre (58) im Bereich des Auftreffens des Strahles (50b) auf dem Werkstück vorgesehen wird.

6. Verfahren nach einem der vorausgegangenen Ansprüche, wobei wenigstens ein Teil (25) des Werkzeuges (26b) behandelt wird, um die Absorption der Laserstrahlung zu begünstigen.

7. Verfahren zum Laserbearbeiten eines Werkstückes mit den Schritten des Ankoppelns eines Strahles an das Werkstück und des Fortführens des Bestrahlens des Werkstückes mit einem Strahl einfallender Strahlung, dadurch gekennzeichnet, daß der Strahl einen Durchmesser (d) aufweist, der größer oder gleich der minimalen Dicke (t) des Werkstückes (10b) während des Bearbeitens ist.

8. Verfahren zur Laserbearbeitung nach Anspruch 7, weiterhin gekennzeichnet dadurch, daß der Strahl (50b) relativ zum Werkstück (10b) übertragen wird, um das Bearbeiten durchzuführen.

9. Verfahren nach Anspruch 7 oder 8, weiterhin dadurch gekennzeichnet, daß der Strahl (50b) an das Werkstück (10b) durch Bestrahlen eines Werkzeuges (26b) angekoppelt wird, das seinerseits im Bereich des Werkstückes (10b) angeordnet ist, und daß der Strahl (50b) die Temperatur des Werkzeuges (26b) anhebt, um Energie auf das Werkstück zu übertragen.

10. Verfahren nach einem der Ansprüche 7 bis 9, dadurch gekennzeichnet, daß eine sauerstoffangereicherte Atmosphäre (58) um den Strahl (50b) herum vorgesehen wird, wenn dieser auf das Werkstück (10b) aufprallt.

11. Verfahren nach einem der Ansprüche 1 bis 10, weiterhin dadurch gekennzeichnet, daß dem Werkstück (10b) Wärme nach dem Bearbeiten zugeführt wird, um dessen Abkühlen zu verzögern.

12. Laserbearbeitungsvorrichtung mit einer Laserstrahlungsquelle (20b) zum Erzeugen eines Strahles (50b) zusammenhängender Strahlung, sowie ein Werkzeug (26b) mit einer Fläche, die von der Strahlung beaufschlagt wird und deren Temperatur angehoben wird, wobei das Werkzeug (26b) im Bereich des Werkstückes (10b) angeordnet ist, um Energie hierauf zu übertragen, dadurch gekennzeichnet, daß Mittel (22b) vorgesehen sind, um den Strahl relativ zum Werkzeug (26b) zu bewegen und über das Werkstück (10b) zu leiten, um dessen Bearbeitung durchzuführen.

13. Vorrichtung nach Anspruch 12, dadurch gekennzeichnet, daß wenigstens ein Teil (25) der Außenfläche des Werkzeuges (26b) behanndelt wird, um die Absorption zu steigern.

14. Vorrichtung nach Anspruch 13, dadurch gekennzeichnet, daß wenigstens der genannte Teil (25) einen Absorptionskoeffizienten aufweist, der gleich oder größer als 0,2 an der Wellenlänge des Strahles (50b) ist.

15. Vorrichtung nach Anspruch 14, weiterhin dadurch gekennzeichnet, daß die Absorption der Außenfläche verbessert wird durch Anwenden wenigstens eines Elementes aus der Gruppe, umfassend Farben, Oberflächenoxidation und Anwenden eines Lasers unterschiedlicher Wellenlänge.

16. Vorrichtung nach einem der Ansprüche 12 bis 15, weiterhin dadurch gekennzeichnet, daß das Werkzeug (26) an eine Unterlage (42) angeschlossen ist, und daß ein Isolator (40) zwischen die Unterlage (42) und das Werkzeug (26) gefügt wird, um den Wärmeübergang zwischen diesen zu verhindern.

**17.** Vorrichtung nach einem der Ansprüche 12 bis 16, dadurch gekennzeichnet, daß das Werkzeug (26) eine Trommel und eine Spitze (30) aufweist, die im Bereich des Werkstückes (10) angeordnet wird, und die gegenüber der Trommel einen verringerten Querschnitt aufweist.

**18.** Vorrichtung nach einem der Ansprüche 12 bis 17, dadurch gekennzeichnet, daß das Werkzeug (26) aus einem Material gebildet ist, ausgewählt aus der Gruppe Carbid, Molybdänwolfram, Tantal sowie keramischen Materialien.

**19.** Vorrichtung nach einem der Ansprüche 12 bis 18, dadurch gekennzeichnet, daß ein Fokussiersystem (24) vorgesehen wird, um einen Strahl (50b) zu erzeugen, der einen Durchmesser (d) aufweist, der größer oder gleich der minimalen Stärke (t) ist, gemessen während des Bearbeitens.

**Revendications**

**1.** Méthode de transfert d'énergie d'un faisceau laser (50b) à une pièce à usiner (10b) pour le traitement laser, comprenant les phases consistant à soumettre un outil (20b) à l'action des rayons d'un faisceau laser (50b) pour élever la température de celui-ci, et positionner le-dit outil (28b) adjacent à la-dite pièce à usiner (10b) pour y transférer l'énergie caractérisé en ce que ce-dit faisceau (50b) est transféré du-dit outil (28b) pour chauffer la pièce à usiner (10b) pour atteindre une condition physique prédéterminée de la-dite pièce usiner (10b) pour traiter la-dite pièce à usiner.

**2.** Méthode conformément à la revendication 1 en outre caractérisée en ce que la-dite condition prédéterminée est la fusion d'une partie de la-dite pièce à usiner (10b).

**3.** Méthode conformément à la revendication 1 ou 2 en outre caractérisée en ce que le-dit outil (26b) est en contact avec la-dite pièce à usiner pour transférer l'énergie à celle-ci.

**4.** Méthode conformément à la revendication 1, 2 ou 3 en outre caractérisée en ce que le-dit faisceau (50b) est incident à la-dite pièce à usiner avec un diamètre (d) égal ou supérieur à l'épaisseur minimale (t) de la pièce à usinée (10b) rencontrée pendant le traitement au laser.

**5.** Méthode conformément à la revendication 4 où une atmosphère enrichie en oxygène (58) est fournie adjacente à l'incidence du-dit faisceau (50b) sur la-dite pièce à usiner.

**6.** Méthode conformément à l'une quelconque des revendications précédentes où au moins une partie (25) du-dit outil (26b) est traitée pour renforcer l'absorption du-dit rayonnement laser.

**7.** Méthode de traitement laser d'une pièce à usiner comprenant les phases consistant à couper un faisceau avec la-dite pièce à usiner et à continuer de soumettre la-dite pièce à usiner aux rayons d'un faisceau ayant un rayonnement incident caractérisé en ce que le-dit faisceau présente un diamètre (d) plus grand ou égal à l'épaisseur minimale de la pièce à usiner (10b) rencontrée pendant le traitement.

**8.** Méthode de traitement laser conformément à la revendication 7 en outre caractérisé en ce que le-dit faisceau (50b) est déplacé par translation relative par rapport à la-dite pièce à usiner (10b) pour réaliser le-dit traitement.

**9.** Méthode conformément à la revendication 7 ou 8 caractérisée en outre en ce que le-dit faisceau (50b) est coupé à la-dite pièce à usiner (10) en soumettant un outil (26b) positionné adjacent à la-dite pièce à usiner (10b) à l'action des rayons, le-dit faisceau (50b) élevant la température de l'outil (26b) pour transférer l'énergie à la-dite pièce à usiner.

**10.** Méthode conformément à l'une quelconque des revendications 7 à 9 où une atmosphère enrichie en oxygène (58) est fournie autour du-dit faisceau (50b) pendant son arrivée sur la-dite pièce à usiner (10b).

**11.** Méthode conformément à l'une quelconque des revendications 1 à 10 en outre caractérisée en ce que de la chaleur est fournie (56) à la-dite pièce à usiner (10b) après traitement pour retarder son refroidissement.

**12.** Appareil de traitement laser comprenant une source de rayonnement laser (20b) pour générer un faisceau (50b) de rayons cohérents et un outil (26b) ayant une surface pouvant être soumise aux-dits rayons et pour élever la température de celle-ci, le-dit outil (26b) étant positionné adjacent à la-dite pièce à usiner (10b) pour y transférer l'énergie, caractérisé en ce que des moyens (22b) sont prévus pour déplacer le-dit faisceau relativement par rapport au-dit outil (26b) pour opérer une translation en travers de la-dite pièce à usiner (10b) pour réaliser le traitement de celle-ci.

13. Appareil conformément à la revendication 12 en outre caractérisé en ce que au moins une partie (25) de la-dite surface extérieure du-dit outil (26b) est traitée pour améliorer l'absorption.

14. Appareil conformément à la revendication 13 en outre caractérisé en ce que au moins la-dite partie (25) présente un coefficient d'absorption égal ou supérieur à 0,2 pour la longueur d'onde du-dit faisceau (50b).

15. Appareil conformément à la revendication 14 en outre caractérisé en ce que l'absorption de la-dite surface extérieure est améliorée par application d'au moins l'un des groupes consistant en peinture, oxydation de la surface et application d'un laser d'une longueur d'onde différente.

16. Appareil conformément à l'une quelconque des revendications 12 à 15 en outre caractérisé en ce que le-dit outil (26) est raccordé à un support (42) et qu'un isolant (40) est interposé entre le-dit support (42) et l'outil (26) pour inhiber le transfert de chaleur entre eux.

17. Appareil conformément à l'une quelconque des revendications 12 à 16 où le-dit outil (26) comprend un fût et un bout (30) positionné adjacent à la-dite pièce à usiner (10), le-dit bout (30) présentant une section transversale réduite par rapport au-dit fût.

18. Appareil conformément à l'une quelconque des revendications 12 à 17 où le-dit outil (26) est formé d'une matière sélectionnée dans le groupe carbure, molybdène, tungstène, tantale et céramique.

19. Appareil conformément à l'une quelconque des revendications 12 à 18 en outre caractérisé par un système de focalisation (24) pour obtenir un faisceau (50b) ayant un diamètre (d) plus grand ou égal à l'épaisseur minimale (t) rencontrée pendant le traitement.

FIG. 1

EP 0 742 745 B1

FIG. 2

FIG. 3

MOTOR DRIVER

CONTROLLER

36a

LASER

20a

22a

10a

18a

ANALYSIS SYSTEM

48

DETECTOR

46

28a

32a

MOTOR

FIG. 4

EP 0 742 745 B1

FIG. 5

FIG. 6

FIG. 7

FIG. 8

FIG. 9